# EUROPEAN PATENT SPECIFICATION

(11) **EP 3 921 567 B1**
(45) Date of publication and mention of the grant of the patent: **24.07.2024**
(21) Application number: 20707745.4
(22) Date of filing: 13.01.2020
(51) Int. Cl.: F16L 55/115, B66C 1/62

(54) **PIPE CAP ASSEMBLY**
ROHRKAPPENANORDNUNG
ENSEMBLE BOUCHON DE CONDUITE

(30) Priority: 06.02.2019 GB 201901642; 30.05.2019 GB 201907657
(43) Date of publication of application: 15.12.2021
(73) Proprietor: Thompson, John, North Seaton Ind Estate Ashington Northumberland NE63 0YB (GB)
(72) Inventor: Thompson, John, North Seaton Ind Estate Ashington Northumberland NE63 0YB (GB)
(74) Representative: Fulton, David James
(86) International application number: PCT/GB2020/050059
(87) International publication number: WO 2020/161463

(56) References cited:
- RU-C1- 2 669 114
- US-A- 2 290 515
- US-A- 6 059 136
- US-B1- 6 691 733
- US-B1- 8 646 488

## Description

The present invention relates to the field of offshore construction. More specifically, the present invention concerns a pipe cap assembly suitable for use with tubular components employed to contain high pressure fluids. An application of the pipe cap assembly includes its use with pipelines remotely located within the oil and gas exploration and production industries.

### Background to the Invention

Pipelines are one form of tubular component that are employed throughout the oil and gas industry in order to allow for the safe transport of corrosive products under high pressure. Often there is a requirement for these pipelines to be deployed subsea, for example when they form part of a subsea pig launcher and receiver; a lay down head; an abandon and recovery (A&R) head; or an initiation head or a flooding head. This is most commonly achieved by lowering the equipment off the back of a vessel. In order to do this a large shackle (often greater than 150 tonnes) is attached to a pipe cap assembly which is itself welded to the rigid or flexible pipe that is being laid.

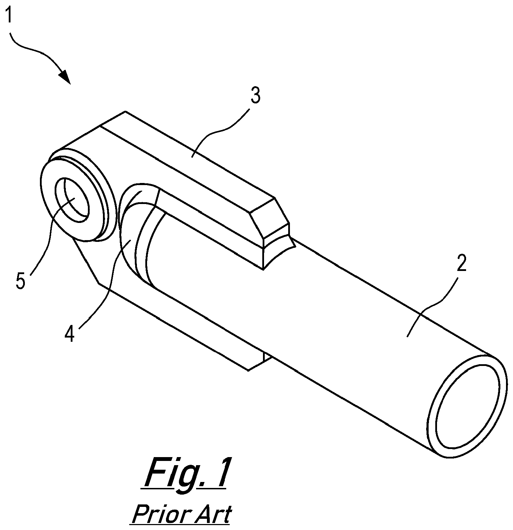

US patent number US 7,281,880 provides an example of a subsea pig launcher and receiver which comprise a fabricated pipe cap assembly, as is known in the art. A schematic representation of such a fabricated pipe cap assembly, depicted generally by reference numeral 1, deployed with a section of a pipeline 2 is presented schematically in Figure 1. The pipe cap assembly 1 can be seen to comprise a fabricated padeye 3 that is welded to the back of a pipe cap 4. Once deployed, the fabricated pipe cap assembly 1 is also welded to an outer surface of the section of pipeline 2. A shackle (not shown) can be attached to the fabricated padeye assembly 1 via a padeye aperture 5. This provides a means for the shackle to lift and lower the pipeline 2, as required by an operator.

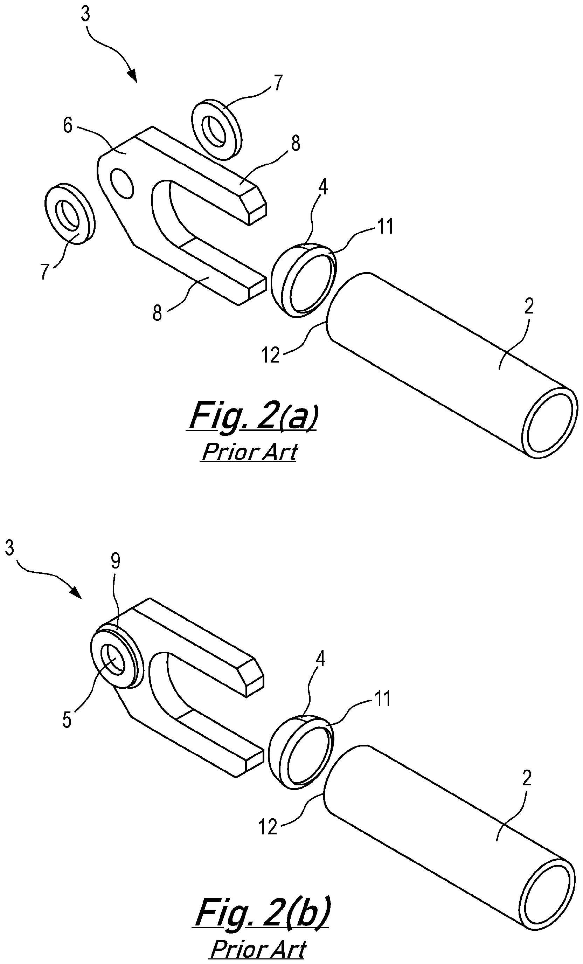

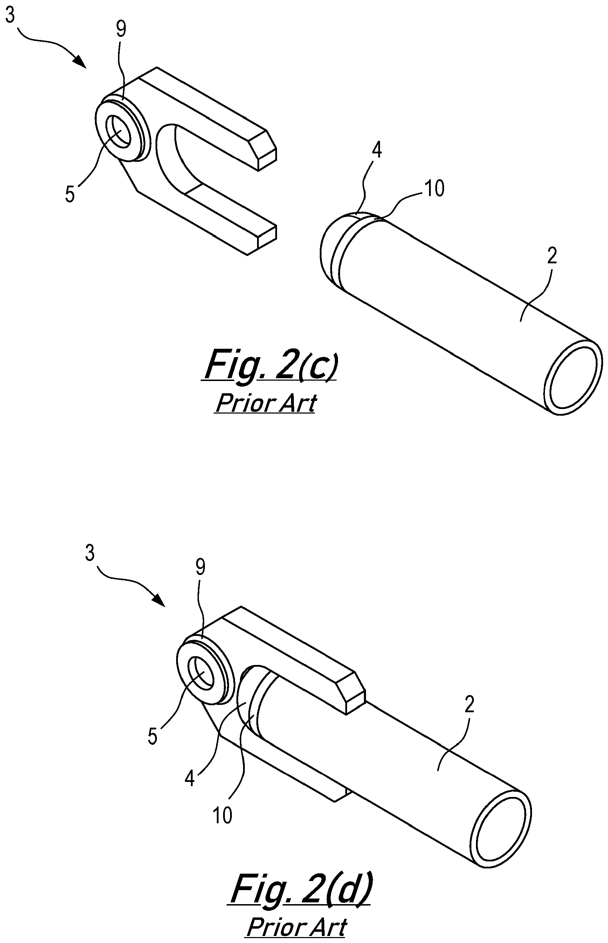

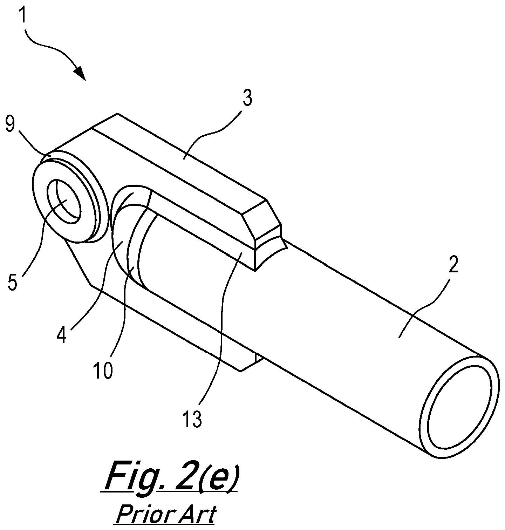

The method of construction of the fabricated pipe cap assembly 1 with the section of pipeline 2 will now be described with reference to Figure 2. In the first instance, Figure 2(a) shows an exploded view of the component parts of the fabricated pipe cap assembly 1 and the section of pipeline 2. These components are generally made from stainless or carbon steel. In the presently described example the pipe cap 4 is a hemispherical pipe cap (e.g. an ASME B16.9 pipe cap); and the fabricated padeye 3 comprises a padeye plate 6, having a thickness of 90 mm, and two cheek plates 7 each having a thickness of 30 mm. The padeye aperture 5 is formed by the combination of the padeye plate 6 and two cheek plates 7. The padeye plate 6 further comprises two limbs 8.

The section of pipeline 2 comprises a 10.75 inch (273 mm) diameter pipe having a wall thickness of 1 inch (25.4 mm).

As depicted by Figure 2(b), the first step involves the construction of the fabricated padeye 3. This is achieved by forming a fillet weld 9 between each cheek plate 7 and opposite sides of the padeye plate 6, thus defining the padeye aperture 5 to have a total length of 150 mm. This length is selected to closely match the length of a reel pin of the shackle (not shown). Typically, the length of the padeye aperture 5 is set to be at least 75% of the length of the reel pin in order to reduce lateral movement within the padeye-shackle connection. Typically, it takes one to two hours to form each fillet weld 9.

Next, as shown in Figure 2(c), a full-penetration butt weld 10 is formed between the pipe cap 4 and a proximal end of the section of pipeline 2. Both the pipe cap 4 and the proximal end of the section of the pipeline 2 comprise a tapered cross-sectional surface 11, 12. Therefore, when the pipe cap 4 and the proximal end section of the pipeline 2 are aligned, the opposing tapered cross-sectional surfaces 11, 12 form a V shaped butt welding joint. It typically takes around four hours to form the full-penetration butt weld 10.

The next stage of the process involves the combined section of the pipeline 2 and pipe cap 4 being located between the two limbs 8 of the padeye plate 6, as presented in Figure 2(d). Thereafter, as shown in Figure 2(e), a partial penetration weld 13 is formed between the two limbs 8 of the padeye plate 6 and the outer surface of the section of pipeline 2. Typically, the partial penetration weld 13 takes between twelve to sixteen hours to complete.

Finally, it is necessary to inspect the welds 9, 10 and 13 of the fabricated pipe cap assembly 1 for imperfections. This is achieved by employing a combination of:
1) visual inspection testing techniques;
2) radiography or ultrasonic testing techniques; and
3) magnetic particle inspection (for carbon steel components) or dye-penetrant inspection (for stainless steel components) testing techniques,
either during the manufacture process, or alternatively, following completion of the fabricated pipe cap assembly 1. Of the above testing techniques, the radiography or ultrasonic testing techniques are known to be the most accurate and thus offer the greatest reliability.

In practice, only the inspection techniques detailed at 1) and 3) above can be performed on the partial-penetration weld 13 and the fillet welds 9 because of the thickness and location of these welds 9 and 13 within the fabricated pipe cap assembly 1. These same testing techniques may also be performed on the full-penetration butt weld 10. Advantageously, a radiography or ultrasonic testing techniques can also be performed on the full-penetration butt weld 10 however, this must be performed before the fabricated padeye 3 is welded around it.

As a result of the above, welds 9 and 13 are more at risk of causing structural failure of the fabricated pipe cap assembly 1 during normal operation that the full-penetration butt weld 10. Given that three welds 9, 10 and 13 require to be inspected this process can take several days to complete.

It will be appreciated by the skilled reader that the use of the two cheek plates 7 could be avoided if a padeye plate 6 having a thickness of 150 mm was adopted. However, such a design significantly increases the time it takes to complete partial penetration weld 13 due to its increased thickness. In addition, the increased thickness of weld 13 also increasing the risk of imperfections, and thus the chance of structural failure of the fabricated pipe cap assembly 1. This is further exacerbated by the fact that inspection of weld 13 can only be achieved by employing the inspection techniques detailed at 1) and 3) above.

A disadvantage of the fabricated pipe cap assembly 1 known in the art and its deployment with the section of pipeline 2 is the length of time it takes to assemble these component.

In total the three welds 9, 10 and 13 can take a total of eighteen to twenty-two hours to complete. Factoring in the time taken to produce or acquire the constituent components, assembling these components, performing welding inspection techniques and rectifying any imperfections, it can take three days or more to manufacture a single fabricated pipe cap assembly 1.

A further disadvantage is the relative likelihood of there being an imperfection within one or more of the welds 9, 10 and 13. Unless these imperfections can be rectified then the fabricated pipe cap assembly 1 cannot be operationally deployed and the above described construction steps must be repeated to construct a new fabricated pipe cap assembly 1.

An example of a tapping connector known in the art is disclosed in United States patent number US6,691,733 B1.

### Summary of the Invention

It is an object of an aspect of the present invention to provide a pipe cap assembly that obviates or at least mitigates one or more of the aforesaid disadvantages of the fabricated pipe cap assemblies known in the art.

According to a first aspect of the present invention there is provided a monolithic subsea pipe cap assembly comprising a unitary body, a connector integrally formed at a proximal end of the unitary body and a pipe cap integrally formed at a distal end of the unitary body wherein the pipe cap comprises a tapered cross-sectional surface suitable for butt welding the monolithic subsea pipe cap assembly to a tubular component employed to contain high pressure fluids
characterised in that the connector comprises a padeye or a hook.

As no welds are required in the formation of the monolithic pipe cap assemblies there is a significant reduction in the associated production time and a reduced risk of imperfections being formed when compared with the fabricated pipe cap assemblies known in the art. This results in a reduced risk of failure of the monolithic pipe cap assembly when deployed in the field.

The pipe cap may comprise a hemispherical pipe cap; a semi-hemispherical pipe cap; an ellipsoidal pipe cap; a torispherical pipe cap; or a flat unstayed pipe cap.

Optionally the unitary body comprises a cylindrical billet. The cylindrical billet preferably comprises a circular cross section. Alternatively, the unitary body comprises a forged shaped unitary body.

According to a second aspect of the present invention there is provided method of producing a monolithic subsea pipe cap assembly, the method comprising:
- selecting a unitary body;
- forming an integrated pipe cap at a distal end of the unitary body; and
- forming an integrated connector at a proximal end of the unitary body; and
- forming a tapered cross-sectional surface on the pipe cap for butt welding the monolithic subsea pipe cap assembly to a tubular component employed to contain high pressure fluids;
characterised in that the integrated connector comprises a padeye or a hook.

The forming of the integrated pipe cap at the distal end of the unitary body may comprise employing a turning operation. The turning operation is preferably performed by a Computer Numerical Control (CNC) machine.

Preferably forming of the integrated pipe cap at the distal end of the unitary body comprises the formation of a hemispherical pipe cap; a semi-hemispherical pipe cape; an ellipsoidal pipe cap; a torispherical pipe cap; or a flat unstayed pipe cap.

The forming of the integrated connector at the proximal end of the unitary body may comprise employing a milling and boring operation. The milling and boring operation is preferably performed by a Computer Numerical Control (CNC) machine.

Optionally, selecting the unitary body comprises selecting a cylindrical billet. Preferably the cylindrical billet comprises a circular cross section. Alternatively, selecting the unitary body comprises selecting a forged shaped unitary body.

Embodiments of the second aspect of the invention may comprise features to implement the preferred or optional features of the first aspect of the invention or vice versa.

According to a third aspect of the present invention there is provided a method of attaching a monolithic subsea pipe cap assembly to a section of pipeline, the method comprising
- providing a monolithic subsea pipe cap assembly in accordance with the first aspect of the invention; and
- forming a weld between the monolithic subsea pipe cap assembly and an end of the section of pipeline.

The above method has the advantage that only one component is required to be sourced when the monolithic pipe cap assembly is required to be deployed with a section of pipeline. This simplifies the selection process while reducing construction times. Connecting the monolithic pipe cap assembly to the section of pipeline is also significantly quicker since this process only requires the employment of a single weld e.g. a single full-penetration butt weld.

The method may further comprise inspecting the weld for imperfections. Most preferably inspecting the weld for imperfections comprises performing a radiography or ultrasonic testing technique.

As the weld can be fully inspected with a radiography or ultrasonic testing technique, imperfections can be more easily detected and thus the risk of failure of the monolithic pipe cap assembly during operation can be significantly reduced.

Embodiments of the third aspect of the present invention may comprise features to implement the preferred or optional features of the first or second aspects of the invention or vice versa.

### Brief Description of Drawings

There will now be described, by way of example only, various embodiments of the invention with reference to the drawings, of which:
Figure 1 presents perspective view of a fabricated pipe cap assembly known in the art attached to a proximal end of a section of pipeline;
Figure 2 presents perspective views of the method of assembly of the fabricated pipe cap assembly of Figure 1 with the proximal end of the section of pipeline;
Figure 3 presents a monolithic pipe cap assembly in accordance with an embodiment of the present invention;
Figure 4 presents a monolithic pipe cap assembly in accordance with an alternative embodiment of the present invention;
Figure 5 presents perspective views of the of the method of production of the monolithic pipe cap assembly of Figure 3;
Figure 6 presents perspective views of the method of attachment of the monolithic pipe cap assembly of Figure 3 with an end of a section of pipeline; and
Figure 7 presents perspective views of a method of production of an alternative embodiment of the monolithic pipe cap assembly.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description of the Preferred Embodiments

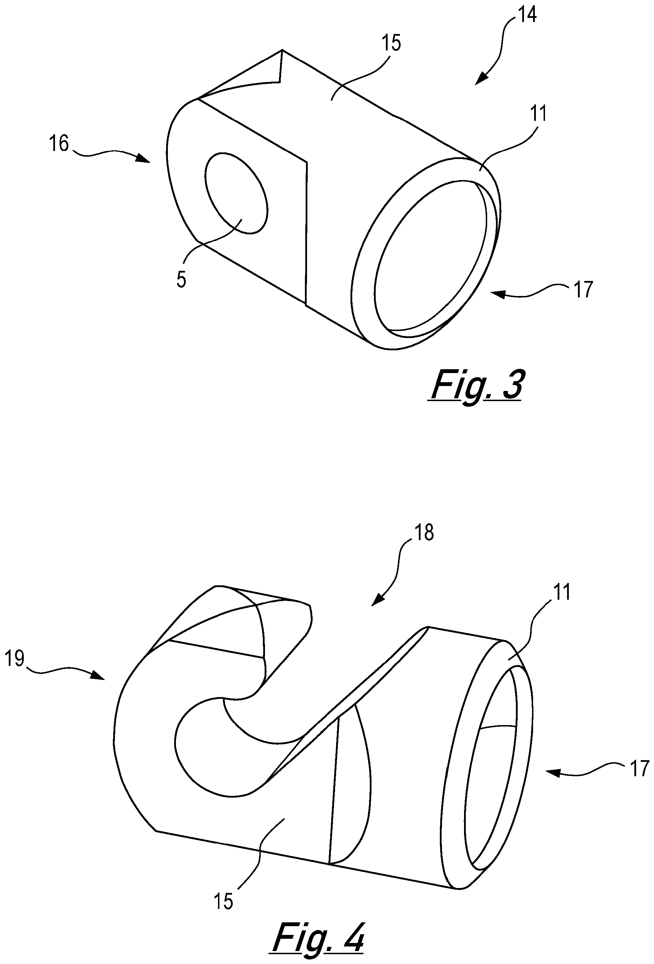

An explanation of the present invention will now be described with reference to Figures 3 to 7.

Figure 3 presents a monolithic pipe cap assembly in accordance with an embodiment of the present invention, depicted generally by reference numeral 14. The monolithic pipe cap assembly 14 comprises a unitary body 15 integrally formed at a proximal end of which is a connector in the form of a padeye 16, while a pipe cap 17 is integrally formed at a distal end. In the presently described embodiment, the padeye 16 has a thickness of 150 mm while the pipe cap 17 takes the form of a hemispherical pipe cap (e.g. an ASME B16.9 pipe cap) suitable for attachment to the end of a section of pipeline 2.

Figure 4 presents a monolithic pipe cap assembly in accordance with an alternative embodiment of the present invention, depicted generally by reference numeral 18. This embodiment contains many of the same elements as the pipe cap assembly 14 of Figure 3 which are thus marked with identical reference numerals. The main difference is that the padeye connector 16 at the proximal end of the device has been replaced be an integrated hook 19.

It will be appreciated by the skilled reader that the pipe cap 17 may take an alternative form to the above described hemispherical pipe cap. For example, the pipe cap 17 may take the form of a semi-hemispherical pipe cape; an ellipsoidal pipe cap; a torispherical pipe cap; a flat unstayed pipe cap or any other pipe cap design known to those in the art. The particular choice pipe cap will depend on the intended use of the monolithic pipe cap assembly 14 or 18, and the environment within which it is to be deployed.

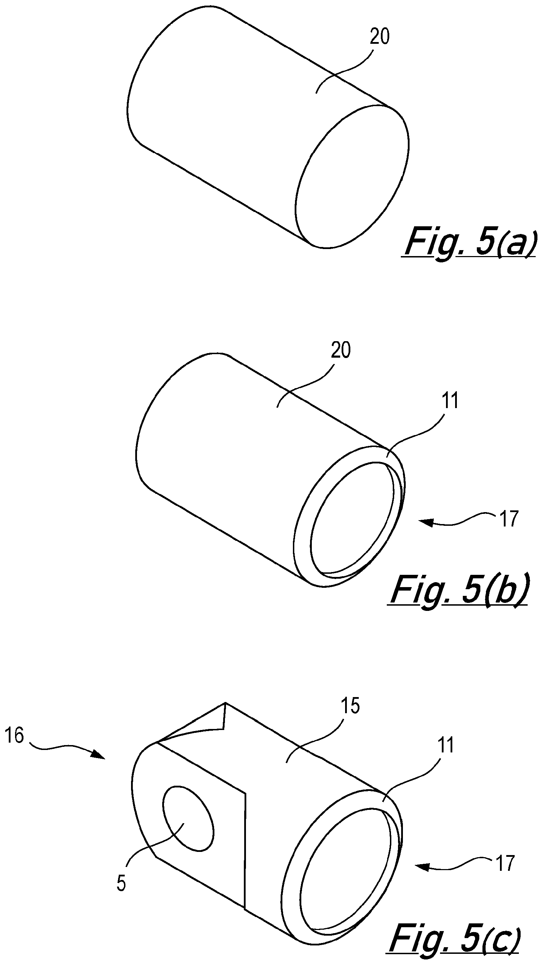

A method of production the monolithic pipe cap assembly 14 will now be described with reference to Figure 5.

The first stage, as presented in Figure 5(a), involves the provision of a unitary body in the form of a cylindrical billet 20, having a circular cross section, made from of a suitable material for the monolithic pipe cap assembly 14. The choice of the cylindrical billet 20 depends on the required dimensions of the monolithic pipe cap assembly 14, the integrated pipe cap 17 and the integrated padeye 16. In the presently described embodiment the cylindrical billet 20 has a diameter of 10.75 inches (273 mm), a length of 20 inches (508 mm) and is made from carbon steel. Alternatively, a stainless steel cylindrical billet 20 could be employed.

Figure 5(b) presents the second stage of the production process which involves the formation of the pipe cap 17 at the distal end of the cylindrical billet 20. In the presently described embodiment the pipe cap 17 is a hemispherical pipe cap and is formed by employing a turning operation at the distal end of the cylindrical billet 20. The turning operation is preferably performed by a Computer Numerical Control (CNC) machine.

Figure 5(c) presents the final stage of the production process which involves the formation of the padeye 16 at the proximal end of the cylindrical billet 20. In the presently described embodiment the padeye 16 is formed by employing a milling and boring operation at the proximal end of the cylindrical billet 20. The milling and boring operation is preferably performed by a CNC machine.

It will be appreciated that the order in which the formation of the pipe cap 17 and the padeye 16 is performed is not critical to the method of production the monolithic pipe cap assembly 14 i.e. the order of stages described with reference to Figures 5(b) and 5(c) may be reversed. Indeed, modern CNC machines are capable of performing these two stages simultaneously.

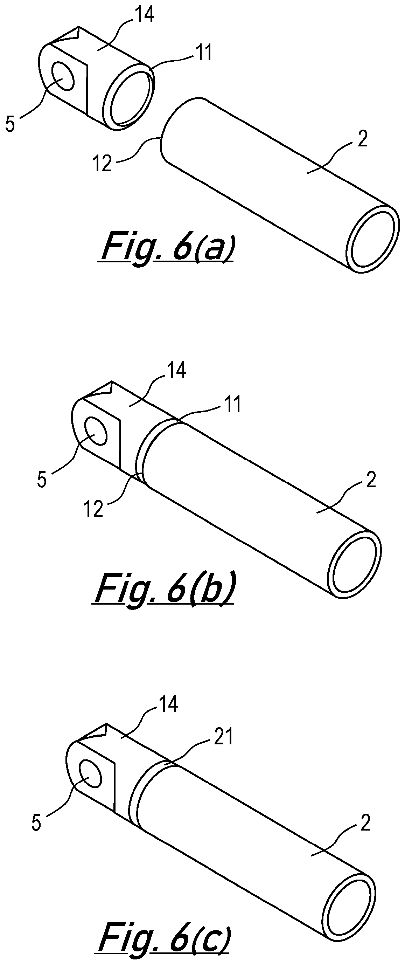

A method of attachment of the monolithic pipe cap assembly 14 of Figure 3 with an end of a section of a pipeline 2 will now be described with reference to Figure 6.

The first stage, as presented in Figure 6(a), involves the selection of the monolithic pipe cap assembly 14 for the particular section of pipeline 2.

Next, the selected monolithic pipe cap assembly 14 is positioned so that it abuts the proximal end of the section of pipeline 2, see Figure 6(b).

The penultimate step involves a full-penetration butt weld 21 being formed between the monolithic pipe cap assembly 14 and the proximal end of the section of pipeline 2. Both the pipe cap 17 and the proximal end of the section of pipeline 2 comprise tapered cross-sectional surfaces 9, 10. Therefore, when the pipe cap 17 and the proximal end section of the pipeline 2 are aligned, the opposing tapered cross-sectional surfaces 9, 10 form a V shaped butt welding joint. It typically takes around four hours to form the full-penetration butt weld 21.

Finally, it is necessary to inspect the full-penetration butt weld 21 of the combined structure for imperfections. This can be achieved by employing one or more of the known testing techniques, namely:
1) visual inspection testing techniques;
2) radiography or ultrasonic testing techniques; and
3) magnetic particle inspection (for carbon steel components) or dye-penetrant inspection (for stainless steel components) testing techniques,

Given that only one full-penetration butt weld 21 requires to be inspected this process can take less than a day to complete.

It will be appreciated by the skilled reader that the monolithic pipe cap assembly 18 of Figure 4 is formed in a similar manner to that described above. The main difference involves the final stage where, instead of the padeye 16 being formed at the proximal end of the cylindrical billet 20, an integrated hook 19 is formed instead.

A method of production an alternative monolithic pipe cap assembly 22. will now be described with reference to Figure 5.

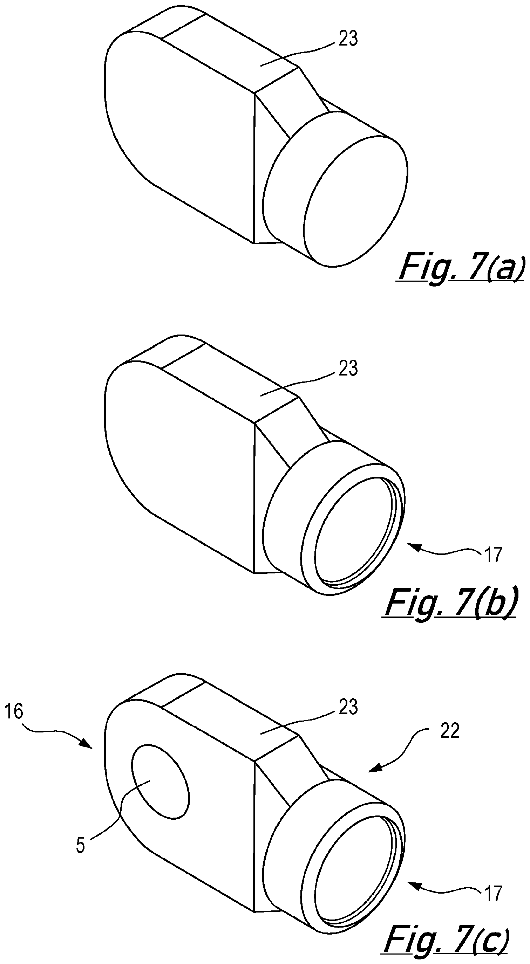

The first stage, as presented in Figure 7(a), involves the provision of a unitary body in the form of a forged shaped unitary body 23. The choice of the forged shaped unitary body 23 again depends on the required dimensions of the monolithic pipe cap assembly 22, the integrated pipe cap 17 and the integrated padeye 16. In the presently described embodiment the forged shaped unitary body 23 is made from carbon steel. Alternatively, a stainless steel forged shaped unitary body 23 could be employed.

Figure 7(b) presents the second stage of the production process which involves the formation of the pipe cap 17 at the distal end of the forged shaped unitary body 23. In the presently described embodiment the pipe cap 17 is again a hemispherical pipe cap and is formed by employing a turning operation at the distal end of the forged shaped unitary body 23. The turning operation is again preferably performed by a Computer Numerical Control (CNC) machine.

Figure 5(c) presents the final stage of the production process which involves the formation of the padeye 16 at the proximal end of the forged shaped unitary body 23. In the presently described embodiment the padeye 16 is formed by employing a milling and boring operation at the proximal end of the forged shaped unitary body 23. The milling and boring operation is again preferably performed by a CNC machine.

The monolithic pipe cap assembly 22 has the advantage over the monolithic pipe cap assemblies 14 or 18 in that the CNC machining processes are easier to complete and involve the production of less waste material.

The monolithic pipe cap assemblies 14, 18 or 22 of the present invention offer a number of advantageous over the fabricated pipe cap assembly 1 known in the art.

In the first instance there are no welds required in the formation of the monolithic pipe cap assemblies 14, 18 or 22. This fact not only decreases production times but it also means there is a reduced risk of imperfections being formed, and thus a reduced risk of failure of the monolithic pipe cap assemblies 14, 18 or 22 when deployed in the field..

When it comes to deployment, there is only one component that is required to be sourced when the monolithic pipe cap assemblies 14, 18 or 22 are employed. This simplifies the selection process while again reducing construction times.

Connecting the monolithic pipe cap assemblies 14, 18 or 22 to the section of pipeline 2 is also significantly quicker since this process only requires the employment of a single weld 21. As this weld 21 can be fully inspected by one or more of the known testing techniques, imperfections can be more easily detected and thus the risk of failure of the monolithic pipe cap assemblies 14, 18 or 22 during operation can be further reduced.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A monolithic subsea pipe cap assembly (14, 18) comprising a unitary body (15), a connector (16,19) integrally formed at a proximal end of the unitary body (15) and a pipe cap (17) integrally formed at a distal end of the unitary body (15) wherein the pipe cap (17) comprises a tapered cross-sectional surface (11) suitable for butt welding the monolithic subsea pipe cap assembly (14, 18) to a tubular component (2) employed to contain high pressure fluids
**characterised in that**
the connector comprises a padeye (16) or a hook (19).

2. A monolithic subsea pipe cap assembly (14, 18) as claimed in claim 1 wherein the pipe cap (17) comprises a hemispherical pipe cap; a semi-hemispherical pipe cape; an ellipsoidal pipe cap; a torispherical pipe cap; or a flat unstayed pipe cap.

3. A monolithic pipe cap assembly (14, 18) as claimed in any of the preceding claims wherein the unitary body (15) comprises a cylindrical billet (20) or a forged shaped unitary body (23).

4. A monolithic pipe cap assembly (14, 18) as claimed in claim 3 wherein the cylindrical billet (20) comprises a circular cross section.

5. A method of producing a monolithic subsea pipe cap assembly (14, 18), the method comprising:
- selecting a unitary body (15);
- forming an integrated pipe cap (17) at a distal end of the unitary body (15); and
- forming an integrated connector (16, 19) at a proximal end of the unitary body (15), and
- forming a tapered cross-sectional surface (11) on the pipe cap (17) for butt welding the monolithic subsea pipe cap assembly (14, 18) to a tubular component (2) employed to contain high pressure fluids
**characterised in that**
the integrated connector (16,19) comprises a padeye (16) or a hook (19).

6. A method of producing a monolithic subsea pipe cap assembly (14, 18) as claimed in claim 5 wherein forming of the integrated pipe cap (17) at the distal end of the unitary body (15) comprises employing a turning operation.

7. A method of producing a monolithic subsea pipe cap assembly (14, 18) as claimed in either of claims 5 or 6 wherein forming of the integrated pipe cap (17) at the distal end of the unitary body (15) comprises the formation of a hemispherical pipe cap; a semi-hemispherical pipe cape; an ellipsoidal pipe cap; a torispherical pipe cap; or a flat unstayed pipe cap.

8. A method of producing a monolithic subsea pipe cap assembly (14, 18) as claimed in any of claims 5 to 7 wherein forming of the integrated connector (16, 19) at the proximal end of the unitary body (15) comprises employing a milling and boring operation.

9. A method of producing a monolithic subsea pipe cap assembly (14, 18) as claimed in any of claims 5 to 8 wherein selecting the unitary body (15) comprises selecting a cylindrical billet (20).

10. A method of producing a monolithic subsea pipe cap assembly (14, 18) as claimed in claim 9 wherein the cylindrical billet (20) comprises a circular cross section.

11. A method of producing a monolithic subsea pipe cap assembly (14, 18) as claimed in any of claims 5 to 8 wherein selecting the unitary body (15) comprises selecting a forged shaped unitary body (23).

12. A method of attaching a monolithic subsea pipe cap assembly (14, 18) to a section of pipeline (2), the method comprising
- providing a monolithic pipe cap assembly (14, 18) as claimed in any of claims 1 to 4; and
- forming a weld (21) between the monolithic pipe cap assembly (14, 18) and an end of the section of pipeline (2).

13. A method of attaching a monolithic subsea pipe cap assembly (14, 18) to a section of pipeline (2) as claimed in claim 12 wherein the method further comprises inspecting the weld (21) for imperfections.

## Patentansprüche

1. Eine monolithische Unterwasser-Rohrkappenanordnung (14, 18), die einen einheitlichen Körper (15), einen Verbinder (16, 19), der an einem proximalen Ende des einheitlichen Körpers (15) integral ausgebildet ist, und eine Rohrkappe (17), die an einem distalen Ende des einheitlichen Körpers (15) integral ausgebildet ist, umfasst, wobei die Rohrkappe (17) eine konische Querschnittsfläche (11) umfasst, die zum Stumpfschweißen der monolithischen Unterwasser-Rohrkappenanordnung (14, 18) an eine rohrförmige Komponente (2), die zum Aufnehmen von Hochdruckflüssigkeiten verwendet wird, geeignet ist,
**dadurch gekennzeichnet, dass**
der Verbinder eine Öse (16) oder einen Haken (19) umfasst.

2. Eine monolithische Unterwasser-Rohrkappenanordnung (14, 18) nach Anspruch 1, wobei die Rohrkappe (17) eine halbkugelförmige Rohrkappe, eine halbhalbkugelförmige Rohrkappe, eine ellipsoide Rohrkappe, eine torisphärische Rohrkappe oder eine flache, nicht abgestützte Rohrkappe umfasst.

3. Eine monolithische Rohrkappenanordnung (14, 18) nach einem der vorhergehenden Ansprüche, wobei der einheitliche Körper (15) einen zylindrischen Block (20) oder einen geschmiedeten geformten einheitlichen Körper (23) umfasst.

4. Eine monolithische Rohrkappenanordnung (14, 18) nach Anspruch 3, wobei der zylindrische Block (20) einen kreisförmigen Querschnitt aufweist.

5. Ein Verfahren zur Herstellung einer monolithischen Unterwasser-Rohrkappenanordnung (14, 18), wobei das Verfahren Folgendes umfasst:
- Auswählen eines einheitlichen Körpers (15);
- Bilden einer integrierten Rohrkappe (17) an einem distalen Ende des einheitlichen Körpers (15); und
- Bilden eines integrierten Verbinders (16, 19) an einem proximalen Ende des einheitlichen Körpers (15) und
- Bilden einer konischen Querschnittsfläche (11) an der Rohrkappe (17) zum Stumpfschweißen der monolithischen Unterwasser-Rohrkappenanordnung (14, 18) an eine rohrförmige Komponente (2), die zum Aufnehmen von Hochdruckflüssigkeiten verwendet wird,
**dadurch gekennzeichnet, dass**
der integrierte Verbinder (16, 19) eine Öse (16) oder einen Haken (19) umfasst.

6. Ein Verfahren zur Herstellung einer monolithischen Unterwasser-Rohrkappenanordnung (14, 18) nach Anspruch 5, wobei das Formen der integrierten Rohrkappe (17) am distalen Ende des einheitlichen Körpers (15) den Einsatz eines Drehvorgangs umfasst.

7. Ein Verfahren zur Herstellung einer monolithischen Unterwasser-Rohrkappenanordnung (14, 18) nach Anspruch 5 oder 6, wobei das Formen der integrierten Rohrkappe (17) am distalen Ende des einheitlichen Körpers (15) das Formen einer halbkugelförmigen Rohrkappe, einer halb-halbkugelförmigen Rohrkappe, einer ellipsoiden Rohrkappe, einer torisphärischen Rohrkappe oder einer flachen, nicht abgestützten Rohrkappe umfasst.

8. Ein Verfahren zur Herstellung einer monolithischen
Unterwasserrohrkappenanordnung (14, 18) nach einem der Ansprüche 5 bis 7, wobei das Formen des integrierten Verbinders (16, 19) am proximalen Ende des einheitlichen Körpers (15) den Einsatz eines Fräs- und Bohrvorgangs umfasst.

9. Ein Verfahren zur Herstellung einer monolithischen
Unterwasserrohrkappenanordnung (14, 18) nach einem der Ansprüche 5 bis 8, wobei das Auswählen des einheitlichen Körpers (15) das Auswählen eines zylindrischen Blocks (20) umfasst.

10. Ein Verfahren zur Herstellung einer monolithischen
Unterwasserrohrkappenanordnung (14, 18) nach Anspruch 9, wobei der zylindrische Block (20) einen kreisförmigen Querschnitt aufweist.

11. Ein Verfahren zur Herstellung einer monolithischen
Unterwasserrohrkappenanordnung (14, 18) nach einem der Ansprüche 5 bis 8, wobei das Auswählen des einheitlichen Körpers (15) das Auswählen eines geschmiedeten geformten einheitlichen Körpers (23) umfasst.

12. Ein Verfahren zum Anbringen einer monolithischen Unterwasser-Rohrkappenanordnung (14, 18) an einem Abschnitt einer Pipeline (2), wobei das Verfahren Folgendes umfasst:
- Bereitstellen einer monolithischen Rohrkappenanordnung (14, 18) nach einem der Ansprüche 1 bis 4 und
- Bilden einer Schweißnaht (21) zwischen der monolithischen Rohrkappenanordnung (14, 18) und einem Ende des Abschnitts der Pipeline (2).

13. Ein Verfahren zum Anbringen einer monolithischen Unterwasser-Rohrkappenanordnung (14, 18) an einem Abschnitt einer Pipeline (2) nach Anspruch 12, wobei das Verfahren zudem das Überprüfen der Schweißnaht (21) auf Unvollkommenheiten umfasst.

## Revendications

1. Un ensemble monolithique de bouchons de conduites sous-marines (14, 18) comprenant un corps unitaire (15), un connecteur (16, 19) formé intégralement à l'une des extrémités proximales du corps unitaire (15) et un bouchon de conduite (17) formé intégralement à l'une des extrémités distales du corps unitaire (15), dans lequel le bouchon de conduite (17) comprend une surface de section transversale conique (11) convenant au soudage bout à bout de l'ensemble monolithique de bouchons de conduites sous-marines (14, 18) à un composant tubulaire (2) utilisé pour contenir des liquides sous haute pression
**caractérisé par le fait que**
le connecteur comprend un oeillet de levage (16) ou un crochet (19).

2. L'ensemble monolithique de bouchons de conduites sous-marines (14, 18) de la revendication 1, dans lequel le bouchon de conduite (17) comprend un bouchon de conduite hémisphérique, un bouchon de conduite semi-hémisphérique, un bouchon de conduite ellipsoïdal, un bouchon de conduite torisphérique ou un bouchon de conduite plat sans haubans.

3. L'ensemble monolithique de bouchons de conduites (14, 18) de l'une des revendications précédentes, dans lequel le corps unitaire (15) comprend une billette cylindrique (20) ou un corps unitaire forgé (23).

4. L'ensemble monolithique de bouchons de conduites (14, 18) de la revendication 3, dans lequel la billette cylindrique (20) présente une section transversale circulaire.

5. Le procédé de fabrication d'un ensemble monolithique de bouchons de conduites sous-marines (14, 18) consistant à :
- sélectionner un corps unitaire (15) ;
- former un bouchon de conduite intégré (17) à l'une des extrémités distales du corps unitaire (15) ; et à
- former un connecteur intégré (16, 19) à l'une des extrémités proximales du corps unitaire (15), et à
- former une surface de section transversale conique (11) sur le bouchon de conduite (17) pour procéder au soudage bout à bout de l'ensemble monolithique de bouchons de conduites sous-marines (14, 18) à un composant tubulaire (2) utilisé pour contenir des liquides sous haute pression
**caractérisé par le fait que**
le connecteur intégré (16, 19) comprend un oeillet de levage (16) ou un crochet (19).

6. Le procédé de fabrication d'un ensemble monolithique de bouchons de conduites sous-marines (14, 18) de la revendication 5, dans lequel la formation du bouchon de conduite intégré (17) à l'extrémité distale du corps unitaire (15) implique de réaliser une opération de rotation.

7. Le procédé de fabrication d'un ensemble monolithique de bouchons de conduites sous-marines (14, 18) de l'une des revendications 5 ou 6, dans lequel la formation du bouchon de conduite intégré (17) à l'extrémité distale du corps unitaire (15) implique de former un bouchon de conduite hémisphérique, un bouchon de conduite semi-hémisphérique, un bouchon de conduite ellipsoïdal, un bouchon de conduite torisphérique ou un bouchon de conduite plat sans haubans.

8. Le procédé de fabrication d'un ensemble monolithique de bouchons de conduites sous-marines (14, 18) de l'une des revendications 5 à 7, dans lequel la formation du connecteur intégré (16, 19) à l'extrémité proximale du corps unitaire (15) implique de réaliser une opération de fraisage et de perçage.

9. Le procédé de fabrication d'un ensemble monolithique de bouchons de conduites sous-marines (14, 18) de l'une des revendications 5 à 8, dans lequel la sélection du corps unitaire (15) implique de sélectionner une billette cylindrique (20).

10. Le procédé de fabrication d'un ensemble monolithique de bouchons de conduites sous-marines (14, 18) de la revendication 9, dans lequel la billette cylindrique (20) présente une section transversale circulaire.

11. Le procédé de fabrication d'un ensemble monolithique de bouchons de conduites sous-marines (14, 18) de l'une des revendications 5 à 8, dans lequel la sélection du corps unitaire (15) implique de sélectionner un corps unitaire forgé (23).

12. Le procédé de fixation d'un ensemble monolithique de bouchons de conduites sous-marines (14, 18) à une section de pipeline (2) consistant à :
- fournir l'ensemble monolithique de bouchons de conduites (14, 18) de l'une des revendications 1 à 4 ; et à
- former une soudure (21) entre l'ensemble monolithique de bouchons de conduites (14, 18) et une extrémité de la section de pipeline (2).

13. Le procédé de fixation d'un ensemble monolithique de bouchons de conduites sous-marines (14, 18) à une section de pipeline (2) de la revendication 12, consistant en outre à inspecter la soudure (21) pour détecter d'éventuelles imperfections.
